**Europäisches Patentamt**

**European Patent Office**

**Office européen des brevets**

(19)

(11) Publication number : **0 494 760 A2**

## (12) EUROPEAN PATENT APPLICATION

(21) Application number : **92300130.9**

(22) Date of filing : **08.01.92**

(51) Int. Cl.⁵ : **G01F 15/02**

(30) Priority : **08.01.91 GB 9100326**

(43) Date of publication of application :
**15.07.92 Bulletin 92/29**

(84) Designated Contracting States :
**BE DE FR GB IT NL**

(71) Applicant : **SMITH METERS LIMITED**
**170, Rowan Road**
**Streatham Vale London, SW16 5JE (GB)**

(72) Inventor : **Pye, Alfred Edward**
**20, Selbourne Avenue**
**Tolworth, Surrey, KT6 7NS (GB)**
Inventor : **Meyer, Kenneth David**
**189, Fallsbrook Road**
**Streatham, London, SW16 6DY (GB)**
Inventor : **Mills, Gerald Frank**
**31, Edinburgh Close**
**Carlyon Bay, St. Austell, Cornwall (GB)**

(74) Representative : **Betteridge, Eileen Margaret**
**170, Rowan Road**
**Streatham Vale London, SW16 5JE (GB)**

(54) **Dry gas meter.**

(57)   A meter has flexible diaphragms reciprocating in measuring chambers, each driving a flag rod (14, 15) linked by a crank mechanism to drive a spindle. The crank mechanism includes a temperature variable link (25) comprising two plates (38, 39) hinged at (36) and adjustable about the hinge by a sealed bellows (33). One arm of the link is weakened by a cut-out (42) providing a thin cross-section (40) which can be compressed to alter the geometry of the link and thus the phase angle between the drive to the spindle and the diaphragm reciprocations.

*Fig.1.*

Jouve, 18, rue Saint-Denis, 75001 PARIS

This invention relates to dry gas meters of the kind having at least one diaphragm reciprocating in a measuring chamber to which gas is alternately admitted and exhausted through valve means. Each reciprocation of the diaphragm indicates the passage of gas equivalent to the swept volume of the chamber and is counted to provide a measure of the mass of the gas. Such gas meters are referred to hereinafter as "meters of the kind described".

It is known, for instance from Patent No. 1364247, that where the volume of a gas is being used as a measure of the mass of gas passing, temperature variations from a pre-determined standard will introduce measurement errors. Patent No. 1364247 describes means for correcting for these errors.

This invention provides a meter of the kind described having a variable link connected in a mechanical drive train through which said reciprocation movements are transmitted both for counting and for driving said valve means and wherein said variable link is adapted to vary its effective length with changes in temperature so as to adjust the swept volume to compensate for said temperature changes and to vary the phase angle between the drive to said valve means and the reciprocating movements.

Preferably the variable link carries bellows means which expands or contracts with temperature changes so as to vary the distance between two attachment points on the variable link to which points are secured other links of the mechanical drive train. At least one end of said bellows means may be adjustable in its position. Said distance between the attachment points may be the "throw" of a crank mechanism whereby the reciprocations of the diaphragms drive a rotating spindle attached to one of said points. Said phase angle variation may be achieved by altering the angular position of said one attachment point with respect to the other. According to one aspect of the invention the variable link provides a weakened section on which said one attachment point is located, allowing it to be bent to change the angular position of the said one attachment point, and thus the phase angle.

A specific example of the invention is shown in the accompanying drawings, in which:-

Figure 1 is a plan view of the valve drive means and linkages of a gas meter,

Figure 2 is a detail plan view of a temperature variable link of the linkages shown in Figure 1, and

Figure 3 is a side view of the temperature variable link of Figure 2.

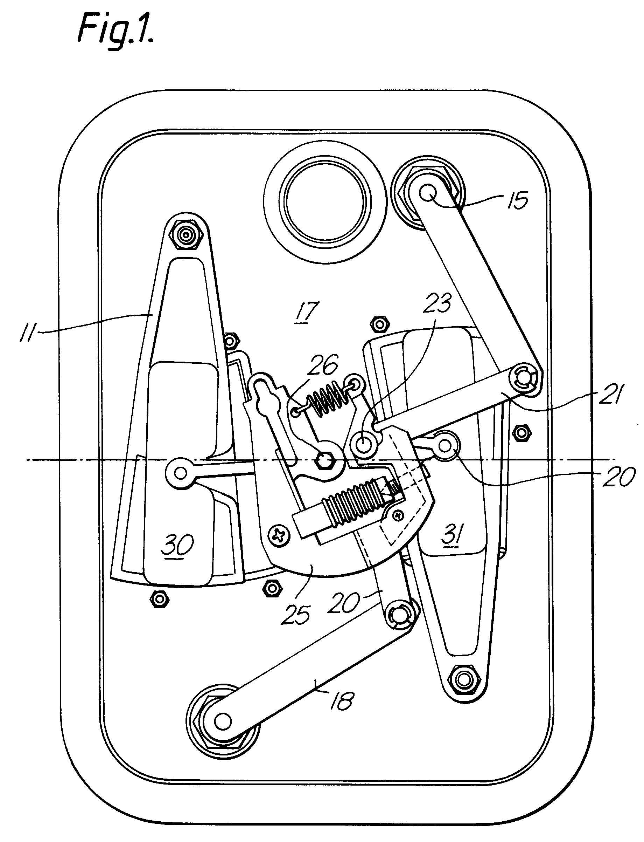

The gas meter, only port of which is shown in Figure 1, has a pair of measuring chambers in each of which a flexible diaphragm reciprocates as gas is alternately admitted and exhausted through valves (11, 12). Each reciprocation indicates the passage through the meter of gas equivalent to the swept volume of the chamber, and the reciprocations are transmitted mechanically to be counted. Each diaphragm is connected to drive a reciprocating flag rod (14, 15) which passes through a valve plate (17) into an upper compartment shown in Figure 1 rich contains the valve drive means and linkages.

Each flag rod is rigidly secured to a reciprocating top arm (18, 19) which is pivotally secured to drive links (20, 21) back and forth. Links (20, 21) are pivoted together and to a pivotal attachment point (23) on the temperature variable link (25).

Another attachment point (26) on the temperature variable link (25) is rigidly secured to a spindle (not shown) driving a gear box (not shown). Thus link (25) acts as a crank translating the reciprocating motion into rotation of the spindle and gear box, the throw of the crank being the distance between attachment points (23) and (26) which is effectively the crank arm. The gear box drives reciprocating levers (28, 29) which drive slide valve covers (30, 31) for the valves (11, 12).

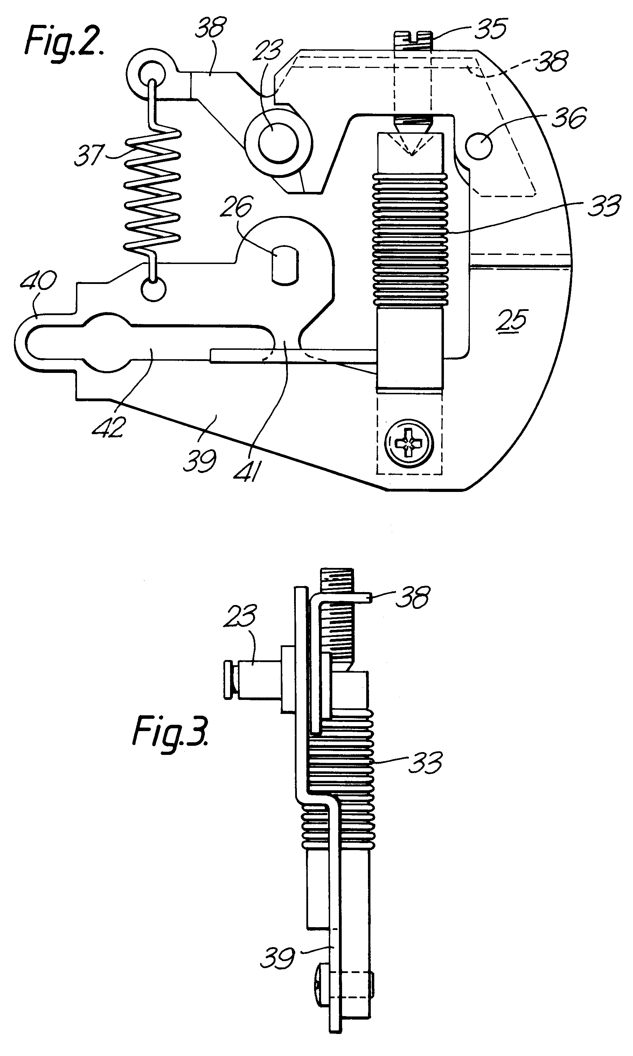

As seen best in Figures 2 and 3, the temperature variable link (25) is formed from two plates (38, 39) hinged together at (36) to form a generally horseshoe shape. A spring (37) across the arms of the horseshoe holds it in place. Also across the arms of the horseshoe is connected a sealed bellows (33). Attachment points (23) and (26) are located one on plate (38) and the other on plate (39) so that the distance between them (the effective crank arm) is subject to variation as the bellows (33) expands and contracts. The distance is the throw of the crank linkage, and so controls the length of movement of the diaphragms varying the swept volume. Thus when the gas is warmer the lengths of movements of the diaphragms are greater, the swept volume is greater and a larger volume of gas is passed through the meter for each rotation of the crank spindle. The index mechanism (not shown) effectively counts the rotations of the crank spindle. These variations of swept volume with temperature are predetermined so that the mass of gas passed through the meter for each rotation of the spindle is approximately the same.

It will be appreciated that the actual expansion or contraction of the bellows is small, of the order of a few thousands of an inch. Thus small variations in the performance of each bellows and small manufacturing tolerances on the position of the bellows mountings in the link (25) may introduce appreciable errors into the temperature compensation. In order for the compensation to be calibrated, one end of the bellows (33) is held in an adjustable calibration screw (35). By adjustment of this screw the effective crank throw can be increased or decreased and thus the temperature adjustment altered.

It is further noted that it is important that there should be a predetermined phase angle between the motion of the diaphragm and the opening and closing of the valve covers (30, 31) so that a smooth action is obtained. This phase angle is determined by the relationship between the rotary angle of the crank spindle attached to attachment point (26) and the angle of the effective crank arm (23, 26).

Tolerances in the manufacture of the temperature variable link and its components mean that there will be variations in the phase angle. The temperature variable link is also adapted to allow adjustment of the phase angle. That arm of the horseshoe which carried the attachment point (26) is formed with an elongated central cut-out (42) which provides thinned, weakened end cross-sections (40) and (41). End section (40) is formed as a half annulus which can be squeezed by a tool placed over the outside or expanded by a tool placed within its compass. The resultant distortion takes place as an arcuate movement centred about the effective centre of end (41) of the cut-out (40). This moves the position of attachment point (26) along this arc changing its angular position with relation to point (23) and thus adjusting the phase angle between the valve operation and the diaphragm movements.

**Claims**

1. A meter of the kind described having a variable link connected in a mechanical drive train through which said reciprocation movements are transmitted both for counting and for driving said valve means and wherein said variable link is adapted to vary its effective length with changes in temperature so as to adjust the swept volume to compensate for said temperature changes, and is adapted also to vary the phase angle between the drive to said valve means and the reciprocating movements.

2. A meter as claimed in claim 1, wherein said variable link carries bellows means which expands or contracts with temperature changes so as to vary the distance between two attachment points on the variable link to which points are secured other links of the mechanical drive train.

3. A meter as claimed in claim 2, wherein at least one end of said bellows means is adjustable in its position.

4. A meter as claimed in claim 2 or claim 3, wherein the variable link forms a crank mechanism whereby the reciprocations of the diaphragms drive a rotating spindle attached to one of said points, the distance between the said two attachment points comprising the "throw" of the crank mechanism.

5. A meter as claimed in any of claims 2 to 4, wherein the angular position of one of the attachment points relative to the other is variable to achieve the adjustment of the phase angle.

6. A meter as claimed in claim 5, wherein said variable link includes a weakened section on which said one attachment point is located, bending of said weakened section effecting angular movement of said one attachment point relative to the other.

7. A meter as claimed in claim 6, wherein said variable link is formed from two parts hinged together to form a generally horseshoe shape,= the two attachment points being located one on each part, and wherein one of said parts has a central cut-out providing said weakened section.

8. A meter as claimed in claim 7, wherein said weakened section forms a half annulus which can readily be squeezed by a tool placed over the outside or expanded by a tool placed within its compass.

9. A meter of the kind described substantially as described hereinbefore with reference to the accompanying drawings.

# Fig.1.

Fig.2.

Fig.3.